# EUROPEAN PATENT APPLICATION

(11) **EP 4 683 140 A1**
(43) Date of publication of application: **21.01.2026**
(21) Application number: 25191685.4
(22) Date of filing: 24.07.2025
(51) Int. Cl.: H02G 1/14, H01R 13/648, H02G 15/00, H02G 15/02

(54) **METHOD OF FORMING A CABLE TERMINATION AND CABLE**

(71) Applicant: ASML Netherlands B.V., 5500 AH Veldhoven (NL)
(72) Inventor: WESTERHUIS, Evert, Auke, Rinze, 5500 AH Veldhoven (NL); KREUNEN, Joshua, 5500 AH Veldhoven (NL); BASTIAANS, Koen, Mathijs, 5500 AH Veldhoven (NL); LEEUWENHOEK, Maarten, 5500 AH Veldhoven (NL); ZIJL, Gomaar, 5500 AH Veldhoven (NL); MARTENS, Nils, Joseph, Johan, 5500 AH Veldhoven (NL); KONING, Johan, Joost, 5500 AH Veldhoven (NL)
(74) Representative: ASML Netherlands B.V.

(57) **Abstract**

According to an embodiment, there is provided a method of forming a cable shielding termination of a cable , the cable comprising an insulator layer surrounding a conductor and a shielding layer surrounding the insulator layer, the method comprising the steps of exposing part of the insulator layer from beneath the shielding layer; etching at least part of the exposed part of the insulator layer creating an etched part; and applying potting material around at least the etched part of the insulator layer and an end portion of the shielding layer.

## Description

### FIELD

The present invention relates to a cable shielding termination of a cable and a method of forming a cable shielding termination.

### BACKGROUND

During manufacturing processes of, for example, semiconductor integrated circuit (IC) chips or displays, undesired defects may occur on a substrate (for example wafer or a mask). Such defects may reduce yield. Defects may occur as a consequence of all kinds of processing necessary to produce an integrated circuit or display, for example, lithography, etching, deposition or chemical mechanical polishing (and/or as a consequence of disturbances of processing such as thermal variation, vibrations, etc). Defects may include patterning defects, in which the created pattern lies outside the pattern tolerance for the process, and particles. Monitoring the extent of defects during the manufacturing processes is therefore important. Such monitoring (or more generally assessment) includes the determination of the existence of a defect, but also the classification of the types of defects found. Such monitoring may be beneficial in that it can be used to improved production yield.

For the assessment of a sample, different types of inspection or metrology systems have been used, including charged particle systems such as electron microscopes. Such assessment for inspection may relate to defects, for example the existence and classification of such defects. Electron microscopes typically generate a probe beam (also often referred to as primary beam) which may, for example, be scanned across a part of the substrate (such as in a scanning electron microscopes (SEM)). Collecting interaction products that result from the interaction of the primary beam with the part of the substrate, allows the electron microscope to collect data representing the probed part of the substrate. The data may be processed/rendered for example by the electron microscope to generate an image representation of the part of the substrate. The collected data for example as a generated image representation allows for measuring structures on the part of the substrate, or allows for identifying defective structures by comparing the image representation with a reference. Such measurement may be referred to as metrology; the identification of defective structures may be referred to as (defect) inspection. The interaction products may contain charged particles which may be referred to as signal particles (for example signal electrons), such as secondary electrons and backscattered electrons, and may contain other interaction products, such as X-ray radiation and even light. To make such inspection or metrology systems (e.g. SEM), electrical potential differences are needed between distinct parts. Additionally or alternatively, for performance (for example, in resolution and throughput) high voltage potential differences are needed.

Cables can be used to apply an electrical potential difference between distinct parts. In high voltage design, there can be unwanted discharge between such parts (including cable shielding terminations) at relative electrical potential. Although various mechanisms are known to prevent or reduce unwanted discharge, known technologies cannot be used in a vacuum due to, for example, outgassing, particle shedding and/or material stability. In addition, when going to smaller dimensions, specifically the millimeter scale, existing technology parts may not fit due to restrictions on available volume. Additionally, reducing the scale of the shielding termination increases the electric fields, thereby increasing the risk of unwanted electric discharge and/or arcing. Arcing can be detrimental in that the cable, and/or other sensitive parts, can be damages which may disable functioning of the system, which may reduce availability of the system. Thus, there is a need for cables, and particularly cable terminations, for high voltage applications and which can be made for use in a vacuum and/or use in small spaces.

### SUMMARY

It is an aim of the present invention to provide a cable comprising a cable termination and a method for forming a cable termination which avoids or ameliorates at least one of the above-identified issues.

According to the present invention, there is provided a method of forming a cable shielding termination of a cable , the cable comprising an insulator layer surrounding a conductor and a shielding layer surrounding the insulator layer, the method comprising the steps of: exposing part of the insulator layer from beneath the shielding layer; etching at least part of the exposed part of the insulator layer creating an etched part; and applying potting material around at least the etched part of the insulator layer and an end portion of the shielding layer.

According to the present invention, there is provided a cable comprising a shielding termination comprising: an insulator layer surrounding a conductor, the insulator layer comprising an etched part on a surface of at least part of the insulator layer, a shielding layer surrounding the insulator layer, wherein part of the shielding layer is exposed towards an end of the cable; and a potting material layer surrounding, and in contact with, at least the etched part of the insulator layer.

### BRIEF DESCRIPTION OF THE DRAWINGS

Embodiments of the invention will now be described, by way of example only, with reference to the accompanying schematic drawings, in which:
- Figure 1 is a schematic diagram of an exemplary assessment apparatus;
- Figure 2 schematically depicts a multi-beam charged particle-optical device, for example of the assessment apparatus of Figure 1;
- Figure 3 schematically depicts a multi-beam charged particle-optical device, for example of the assessment apparatus of Figure 1;
- Figure 4 schematically depicts an alternative multi-beam charged particle-optical device, for example of the assessment apparatus of Figure 1;
- Figure 5 schematically depicts a charged particle-optical device array;
- Figure 6 schematically depicts a single beam charged particle-optical device, for example of the assessment apparatus of Figure 1
- Figures 7A-7D schematically depict a method of forming a cable shield termination of a cable according to an embodiment;
- Figures 8A-8C schematically depict a method of forming a cable shield termination of a cable according to an embodiment; and
- Figures 9 and 10 depict flow diagrams of the methods of forming a cable shield termination according to embodiments.

The Figures are schematic. Within the following description of drawings, the same or like reference numbers refer to the same or like components or entities, and only the differences with respect to the individual embodiments are described. While the description and drawings are directed to an electron-optical apparatus, it is appreciated that the embodiments are not used to limit the present disclosure to specific charged particles. References to electrons, and items referred to with reference to electrons, throughout the present document may therefore be more generally be considered to be references to charged particles, and items referred to in reference to charged particles, with the charged particles not necessarily being electrons. For example, references to an electron-optical device may more generally be considered to be references to a charged particle-optical device.

### DETAILED DESCRIPTION

There is a trend in the semiconductor industry (often known as "Moore's law") to reduce the physical dimensions of structures representing circuit components on a substrate and/or to increase the packing density of such structures, in order to reduce the physical size of electronic devices and/or enhance the computing power of electronic devices. The physical dimensions of such structures may be reduced and/or the packing density of such structures may be increased by increasing lithographic resolution. Manufacturing processes of semiconductor IC chips can have hundreds (100s) of individual steps. An error in any step of the manufacturing process has the potential to adversely affect the functioning of the electronic device. It is desirable to improve the overall yield of the manufacturing process. For example, to obtain a 75% yield for a 50-step manufacturing process (where a step may indicate the number of layers formed on a substrate), each individual step must have a yield greater than 99.4%. If an individual step has a yield of 95%, the overall yield of the manufacturing process would be as low as 7.7%. It is desirable to determine defects quickly so as to maintain a high substrate throughput, defined as the number of substrates processed per hour.

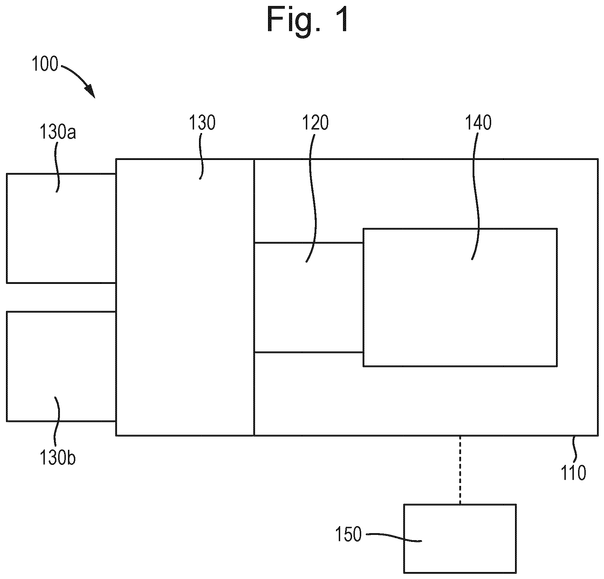

Figure 1 is a schematic diagram illustrating an exemplary assessment apparatus 100, for example a metrology apparatus or an inspection apparatus. The assessment apparatus 100 may be configured to scan a sample with one or more beams of electrons. The sample may be a semiconductor substrate, a substrate made of other material, or a mask, for example. The electrons interact with the sample and generate interaction products. The interaction products comprise signal electrons, for example secondary electrons and/or backscattered electrons, and possibly X-ray radiation. The assessment apparatus 100 may be configured to detect the interaction products from the sample so that a data set may be generated which may be processable into an image or any other data representation of the scanned area of the sample. For clarity, the description below focuses on embodiments in which the interaction products that are detected are signal electrons. The assessment apparatus 100 may comprise, for example during operation, a single beam or a plurality of beams, that is a multi-beam. The component beams of a multi-beam may be referred to as sub-beams or beamlets. A multi-beam may be used to scan different parts of a sample simultaneously. When the assessment apparatus 100 uses a multi-beam, the assessment apparatus 100 may assess a sample more quickly than when the assessment apparatus 100 uses a single-beam. For example, a higher throughput of sample assessment may be achieved using a multibeam assessment apparatus compared to a single beam apparatus.

The assessment apparatus 100 of Figure 1 comprises a vacuum chamber 110, a load lock chamber 120, an electron-optical apparatus 140, an equipment front end module (EFEM) 130 and a controller 150. The electron-optical apparatus 140 (also known as an electron beam apparatus or an electron apparatus) may be within the vacuum chamber 110. The electron-optical apparatus 140 may comprise an electron-optical device (described in more detail below) and an actuatable stage. It should be appreciated that reference in the description to the electron-optical elements of the electron-optical apparatus 140 can be considered to be a reference to the electron-optical device.

The EFEM 130 includes a first loading port 130a and a second loading port 130b. The EFEM 130 may include additional loading port(s). The first loading port 130a and the second loading port 130b may, for example, receive substrate front opening unified pods that contain samples. One or more robot arms (not shown) in the EFEM 130 transport the samples to the load lock chamber 120.

The load lock chamber 120 is used to remove the gas around a sample. The load lock chamber 120 may be connected to a load lock vacuum pump system (not shown), which removes gas particles in the load lock chamber 120. The operation of the load lock vacuum pump system enables the load lock chamber to reach a first pressure below the atmospheric pressure. The vacuum chamber 110, which may be a main chamber of the assessment apparatus 100, is connected to a main chamber vacuum pump system (not shown). The main chamber vacuum pump system removes gas molecules from the vacuum chamber 110 so that the pressure around the sample reaches a second pressure equal to or lower than the first pressure. Different parts of the electron-optical apparatus 140 may have different levels of pressure below the atmospheric pressure. After reaching the required pressure, the sample leaves the load lock chamber 120 and is transported to the electron-optical apparatus 140 by which it may be assessed. The electron-optical apparatus 140 may use either a single beam or a multi-beam for the assessment. Alternatively, an electron-optical device array comprising a plurality of electron-optical devices may be used, further also referred to as a multi-column electron-array, in which each electron-optical device (or each column in the multi-column array) comprises, for example during operation, either a single beam or a multi-beam.

The controller 150 is electronically connected to the electron-optical apparatus 140. The controller 150 may be a processor (such as a computer) configured to control the assessment apparatus 100. The controller 150 may also include processing circuitry configured to execute data, signal and image processing functions for example on the data set for example embodied as signals such as detection signals. The controller 150 may thus include processing circuitry configured to execute processing functions on signal, image and other data produced in the assessment apparatus 100. While the controller 150 is shown in Figure 1 as being outside of the structure that includes the vacuum chamber 110, the load lock chamber 120, and the EFEM 130, it is appreciated that the controller 150 may be part of the structure. The controller 150 may be located in one of the components of the assessment apparatus 100 or it may be distributed over at least two of the components.

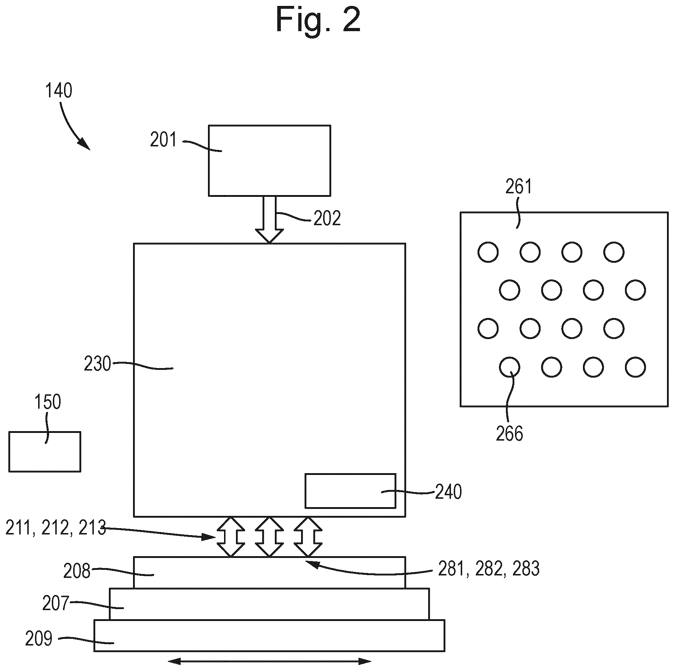

Figure 2 is a schematic diagram illustrating an exemplary electron-optical apparatus 140. The electron-optical apparatus 140 may be provided as part of the assessment apparatus 100 of Figure 1. The electron-optical apparatus 140 includes a source 201 and an electron-optical device 230 (which may also be referred to as an electron-optical column). The source 201 may comprise a cathode (not shown) and an extractor and/or anode (not shown). During operation, the source 201 is configured to emit electrons from the cathode. The electrons may be extracted or accelerated by the extractor and/or the anode to form the source beam 202.

The electron-optical device 230 may be configured to convert the source beam 202 into a plurality of primary beams 211, 212, 213 (which may be referred to as sub-beams or beamlets). The electron-optical device 230 may be configured to direct the primary beams 211, 212, 213 along respective beam paths toward a sample location for the sample 208. Although three beams are illustrated, the number of beams may be of the order of 100s or 1,000s, for example up to 20,000 per electron-optical apparatus 140. The plurality of beams may be referred to collectively as a multi-beam or a beam grid. The different beams may be arranged relative to each other across the beam grid in a pattern. The pattern of the beam grid may be referred to as an array. The electron-optical device 230 has a field of view which may be defined as the area of the surface of the sample 208 within which the primary beams 211, 212, 213 can scan while the aberrations of the electron-optical device 230 remain within a defined value. Alternatively, the field of view may be defined by the maximum scan range of the electron-optical device 230. The field of view may be of the order of millimeters, for example up to 20mm at the sample 208.

The electron-optical device 230 comprises a plurality of electron-optical elements positioned along the beam paths. The electron-optical elements are configured to manipulate the beams. For example, the electron-optical elements may be configured to lens, focus, deflect or correct the beams. The electron-optical elements may be arranged in at least one stack of electron-optical elements. Such an electron-optical element may be positioned upbeam or downbeam with respect to another of the electron-optical elements. The terms upbeam and downbeam relate to the direction of the beams from the source 201 to the sample 208 during use of the electron-optical device 230, which may be expressed as a direction along one or more of the beam paths. In an embodiment some of the different electron-optical elements may, for example, take a planar form, such as a plate 261 (although other forms are available, e.g. cylindrical or curved/part of a cylinder). An electric field that manipulates the beams may be generated between two plates 261, for example by applying, in use, different potentials to neighboring/adjoining plates 261 such as along the beam path. An electric field that manipulates the beams may be generated between surfaces of plates 261 across the beam path for example between the neighboring plates 261. One or more beam apertures 266 may be defined in the plates 261 for the passage of one or more beams. The beam apertures 266 may be arranged in a pattern such as a regular grid for example hexagonal or square. Such a pattern of the beam apertures 266 may be referred to as an aperture array (that is a two-dimensional array over the surface of the plate). The pattern of the beam apertures 266 may correspond to the pattern of beams within the beam grid. Beam apertures 266 in different plates operating on the same beam(s) are typically aligned.

The electron-optical elements may comprise one or more corrector arrays. For example, a corrector array may be integrated into the shape, position and/or size of the beam apertures 266 of the plates 261. The disclosure of such a corrector array as described in WO 2022101072 A1 is hereby incorporated by reference. One or more corrector arrays may comprise multipole deflectors with a specific superposition of potentials applied across the individually controllable electrodes. The disclosure in WO2012165955 of an array of multipole deflectors is hereby incorporated by reference.

One or more of the electron-optical elements may comprise an aperture for the path of a plurality of the beams. For example, the aperture may be a macro aperture for all of the beams. The disclosures of a slit aperture for a collimator or corrector comprising strip electrodes in WO 2021156121 A1 and WO 2021204734 A1 are hereby incorporated by reference. One or more electron-optical elements may comprise one or more plate electrodes that are curved across the path of the beam grid for use as a lens array, a corrector array and/or a collimator array such as disclosed in WO2025/109080, which is hereby incorporated by reference at least so far as the use and application of curved plate electrodes.

In the current embodiment, the electron-optical device 230 may form three probe spots 281, 282, 283 on the surface of the sample 208. The electron-optical device 230 may be configured to deflect the primary beams 211, 212, 213 so as to scan the probe spots 281, 282, 283 across individual scanning areas of the sample 208. In response to incidence of the primary beams 211, 212, 213 on the sample 208, signal electrons are generated from the sample 208, which may include secondary electrons and backscattered electrons. Secondary electrons typically have electron energy of at most 50 eV. Backscattered electrons typically have electron energy of more than 50 eV and less than the landing energy of the primary beams 211, 212, 213.

The electron-optical apparatus 140 comprises a sample holder 207 that supports a sample 208. The sample holder 207 supports the sample 208 for assessment. The sample holder 207 is supported by an actuatable stage 209. The electron-optical apparatus 140 further comprises a detector array 240. The detector array 240 may be part of the electron-optical device 230. The detector array 240 for example detects signal electrons from the sample 208. The detector array 240 generates detection signals based on detection of the signal electrons.

**In** an embodiment, the detector array 240 may define the surface of the electron-optical apparatus 140 facing the sample 208, for example the bottom surface of the electron-optical device 230. There may be more than one detector array at different positions along the paths of the primary beams 211, 212, 213.

The detector array 240 may comprise a plurality of detector elements, with at least one detector element per beam. The detector elements may, for example, be charge capture electrodes, for example metal plates, which may be configured to detect at least some of the signal electrons. Alternatively or additionally, the detector elements may comprise detection diodes configured to detect at least some of the signal electrons. Alternatively or additionally, the detector elements may comprise a scintillator material (such as YAG, being Yttrium Aluminum Garnet) configured to convert signal electrons into photons that may be subsequently detected. The detector elements may be arranged around beam apertures 266 in the bottom surface of the electron-optical device 230 to allow the primary beams 211, 212, 213 to pass towards the sample 208. Each detector element may comprise a plurality of detection segments or may constitute a single sensitive surface for each beam. The detection signal generated by a detector element may be transmitted to a processor for generation of an image. For example, the detection signal may represent a grey value or an intensity value of a pixel of an image.

The detector array 240 may send the detection signals, for example as an imaging signal or a detection signal, to the controller 150 or to a signal processing system (not shown) which may be part of the controller 150. The controller 150 or the signal processing system may be configured to generate images of the corresponding scanned areas of the sample 208. The detector array 240 may be incorporated at least partly into the electron-optical device 230. Alternatively, the detector array 240 may be separate from the electron-optical device 230. For example, the electron-optical apparatus 140 may comprise a secondary electron-optical device configured to direct secondary electrons to the detector array 240. In such an embodiment, the secondary electron-optical device comprises a beam separator (such as a Wien filter, not shown). The beam separator may separate the paths of the primary electrons towards the sample 208 from the paths of the signal electrons away from the sample 208. Note, such a beam separator may be present in a different embodiment with a detector array within the electron-optical device 230 for directing the primary electrons towards the sample and the signal particles to detector elements of the detector array.

The controller 150 (for example a control system comprising distributed controllers) may be connected to various parts (for example components) of the electron-optical apparatus 140 of Figure 2, such as the source 201, the detector array 240, the electron-optical device 230, and the actuatable stage 209. The controller 150 may perform various image processing functions and signal processing functions. The controller 150 may also generate various control signals to govern operations of the assessment apparatus 100.

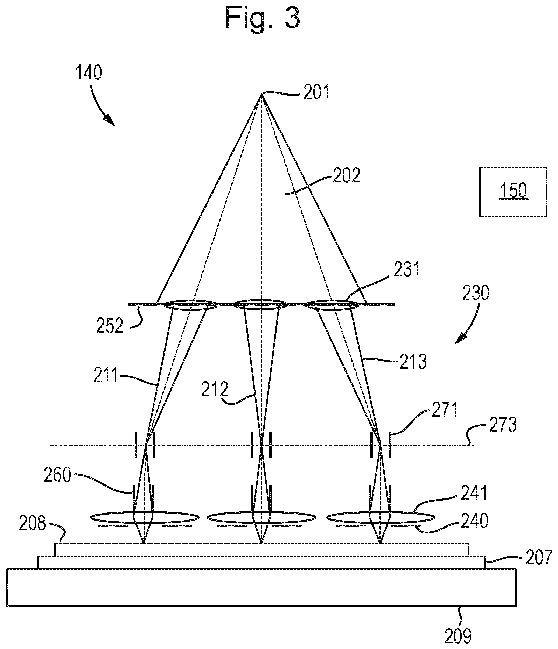

Figure 3 schematically depicts an electron-optical apparatus 140 of an assessment apparatus, for example the assessment apparatus 100 of Figure 1. The electron-optical apparatus 140 of Figure 3 may be the electron-optical apparatus 140 of Figure 2 in which the electron-optical elements of the electron-optical device 230 comprise a beam limiting aperture array 252, a condenser lens array 231, a collimator array 271 for example at an intermediate focus plane 273, a scan deflector array 260, an objective lens array 241 and the detector array 240.

The source 201 generates a diverging source beam 202. The beam limiting aperture array 252 defines a plurality of primary beams 211, 212, 213 from the source beam 202. The condenser lens array 231 focuses the primary beams 211, 212, 213 at the intermediate focus plane 273. The condenser lens array 231 may comprise the beam limiting aperture array 252. Alternatively, the condenser lens array 231 may be downbeam of the beam limiting aperture array 252. The condenser lens array 231 may be electrostatic. In an alternative embodiment the condenser lens array 231 comprises a magnetic element for example as a plurality of magnetic elements / one or more magnetic elements.

The collimator array 271 is configured to collimate the primary beams 211, 212, 213 along respective beam paths towards and substantially orthogonal to a surface of the sample 208. The collimator array 271 may be located at or near the intermediate focus plane 273. The collimator array 271 may comprise a plurality of deflectors configured to deflect respective primary beams 211, 212, 213. Additionally or alternatively the collimator array 271 may comprise a lens array that operates on the different beams to deflect the relative paths of the beams. The collimator array 271 may be electrostatic. The collimator array 271 may consist of a single plate 261 comprising electrodes around the beam apertures 266, such as on the surface around the beam apertures 266 and/or on the inside of the beam apertures 266. The electrodes may cooperate as a deflector per beam aperture 266. Alternatively, the collimator array 271 may comprise a stack of plates 261. In use a potential difference is applied between the plates 261 so as to generate a lensing effect at the beam apertures 266. The plates 261 may have a curvature across the beam path as shown in WO2025109080. Alternatively, the collimator array 271 may comprise a plurality of layers of strip electrode deflectors as shown in WO2021156121 and WO2021204734. A layer of strip electrode deflectors may consist of a plate. Although not shown in Figure 3, in an alternative embodiment the collimator array 271 is replaced by a macro collimator configured to collimate the primary beams 211, 212, 213. The macro collimator may be a magnetic lens, or an electrostatic lens, or a combination of magnetic and electrostatic lens. In a further alternative embodiment, the electron-optical device 230 comprises a macro collimator in addition to the collimator array 271.

The deflectors of the scan deflector array 260 may be formed at apertures of the scan deflector array 260. The deflectors may comprise respective sets of individually controllable electrodes. Such a deflector may be referred to as a multipole deflector. The individually controllable electrodes extend partially along the beam path of the respective beam. The individually controllable electrodes may be controlled to generate, in use, a scan movement of the respective beam across the sample 208. Typically, the sets of individually controllable electrodes operate to scan all of the primary beams 211, 212, 213 simultaneously in parallel across the individual fields of view of the respective objective lenses of the objective lens array 241. Alternatively, the scan deflector array 260 may comprise strip deflectors (as shown in WO2004081910, WO2021156121 and WO2021204734) configured to deflect a row of beams along the individual fields of view of the respective objective lenses of the objective lens array 241.

The objective lens array 241 is configured to focus the primary beams 211, 212, 213 onto the sample 208. The objective lens array 241 may comprise a stack of plates 261. Different potentials are applied to respective plates 261 so as to generate electrostatic fields between adjacent plates 261. The electrostatic fields generate electrostatic lenses that may be configured to focus the primary beams 211, 212, 213. The objective lens array 241 may be proximate the sample 208.

The stack of plates 261 of the objective lens array 241 may be referred to as, or as part of, an objective lens assembly. The objective lens assembly may comprise one or more of the scan deflector array 260, a corrector array (not shown) and the detector array 240 in addition to the objective lens array 241. The objective lens assembly may comprise additional plates having lens functionality providing additional degrees of electron-optical freedom. A control lens array may be comprised by such an additional plate.

In an embodiment the detector array 240 may be integrated into the objective lens array 241. Alternatively (or additionally) the detector array 240 may be upbeam of the bottom surface of the electron-optical device 230. For example, the detector array 240 may be within the objective lens assembly or even upbeam of the objective lens assembly. For example, the detector array 240 may be in or upbeam of the objective lens array 241.

The disclosures in EP 3869535 A1 and WO 2021165136 A1 of a source, a condenser lens array, a collimator array, an objective lens array and a detector array are hereby incorporated by reference.

The electron-optical device 230 may comprise one or more corrector arrays configured to at least partly correct one or more types of aberration of the beams. Such corrector arrays may be associated with or integrated into the condenser lens array 231, the collimator array 271 and/or the objective lens array 241, or between two of these arrays, for example between the condenser lens array and the collimator array.

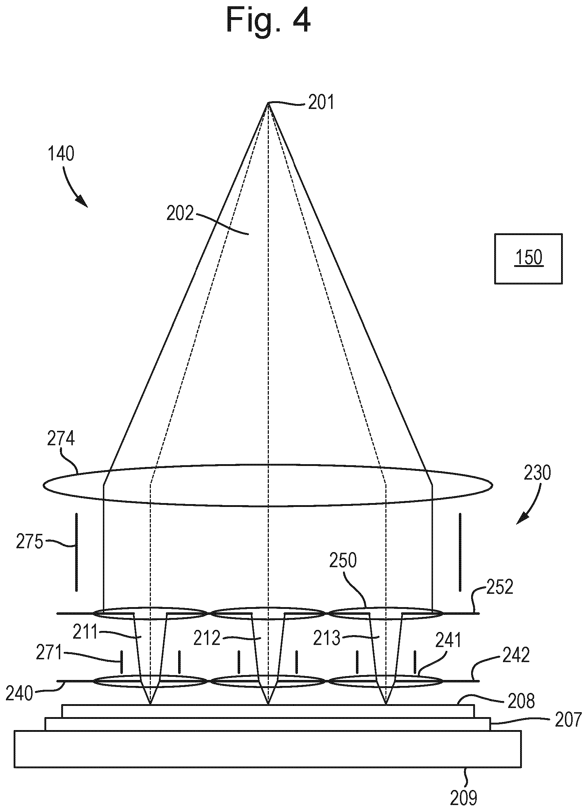

Figure 4 schematically depicts an electron-optical apparatus 140 of an assessment apparatus, for example the assessment apparatus 100 of Figure 1. The electron-optical apparatus 140 of Figure 4 may be the electron-optical apparatus 140 of Figure 2 in which the electron-optical device 230 comprises a macro condenser lens 274, a macro scan deflector 275, a beam limiting aperture array 252 (which may be referred to as an upper beam limiter), a control lens array 250, a collimator array 271, an objective lens array 241, a beam shaper array 242 (which may be referred to as a lower beam limiter) and the detector array 240.

The source 201 generates a diverging source beam 202. The macro condenser lens 274 is located between the source 201 and the objective lens array 241. The macro condenser lens 274 is configured to at least partly collimate the source beam 202. The macro scan deflector 275 is located between the macro condenser lens 274 and the objective lens array 241. The macro scan deflector 275 is configured to operate on the source beam 202 so that the primary beams 211, 212, 213 scan the surface of the sample 208. Additionally or alternatively the electron-optical device 230 may comprise a scan deflector array (not shown) downbeam of the control lens array 250. The macro condenser lens 274 and/or the macro scan deflector 275 may at least in part be magnetic.

The beam limiting aperture array 252 defines a plurality of primary beams 211, 212, 213 from the source beam 202. The beam shaper array 242 and the beam limiting aperture array 252 are plates 261 in which the beam apertures 266 are smaller in dimension than other plates of the electron-optical device 230. The beam apertures 266 of the beam limiting aperture array 252 define the primary beams 211, 212, 213. The beam apertures 266 of the beam shaper array 242 shape the primary beams 211, 212, 213 to at least partially correct for types of aberration in the beams.

The collimator array 271 is configured to collimate the primary beams 211, 212, 213 along respective beam paths towards and substantially orthogonal to a surface of the sample 208. The collimator array 271 may be located between the beam limiting aperture array 252 and the objective lens array 241. The collimator array 271 may be omitted in the current embodiment. Alternatively, when the collimator array 271 is provided, then the macro condenser lens 274 may be omitted. The collimator array 271 may comprise a plurality of deflectors configured to deflect respective primary beams 211, 212, 213. The collimator array 271 may be electrostatic. The collimator array 271 may consist of a single plate 261 comprising the deflectors around the beam apertures 266, for example on the surface around the beam apertures 266 and/or on the inside of the beam apertures 266. Alternatively, the collimator array 271 may comprise a stack of plates 261. In use a potential difference is applied between the plates 261 so as to generate a lensing effect at the beam apertures 266. One or more of the plates may be curved across the path of the beam grid. Alternatively or additionally, the collimator array 271 may comprise a plurality of layers of strip electrode deflectors. A layer of strip electrode deflectors may be a plate.

The objective lens array 241 is configured to focus the primary beams 211, 212, 213 onto the sample 208. The objective lens array 241 may comprise a stack of plates 261. In use, different potentials may be applied to respective plates 261 so as to generate electrostatic fields between adjacent plates 261. The electrostatic fields generate electrostatic lenses that may be configured to focus the primary beams 211, 212, 213. The objective lens array 241 may be proximate the sample 208.

The control lens array 250 may be upbeam of the objective lens array 241. The control lens array 250 may comprise a stack of plates 261, for example at least three plates 261. The control lens array 250 may be configured to control electron-optical parameters of the primary beams 211, 212, 213. In an embodiment, the most downbeam plate of the control lens array 250 is the most upbeam plate of the objective lens array 241. Alternatively, the control lens array 250 may be considered to be part of the objective lens array 241. The control lens array may provide one or more additional degrees in electron-optical freedom such as in pre-focusing, magnification and beam current setting.

The stack of plates 261 of the objective lens array 241 may be referred to as an objective lens assembly. The objective lens assembly may comprise one or more of the beam limiting aperture array 252, the control lens array 250, a corrector array (not shown), the collimator array 271, the beam shaper array 242 and the detector array 240 in addition to the objective lens array 241. The objective lens assembly may comprise additional plates having lens functionality providing additional degrees of electron-optical freedom. A control lens array may be comprised by such an additional plate.

In an embodiment the detector array 240 may be integrated into the objective lens array 241. Alternatively (or additionally) the detector array 240 may be upbeam of the bottom surface of the electron-optical device 230. For example, the detector array 240 may be within the objective lens assembly or even upbeam of the objective lens assembly. For example, the detector array 240 may be in or upbeam of the objective lens array 241.

The disclosures in EP 3869535 A1 and WO 2021165136 A1 of a source, an objective lens array and a detector array are hereby incorporated by reference. The disclosure in WO2022058252 A1 of the collimator array, the macro condenser lens, the macro scan deflector, and the need for a beam limiting aperture array and a beam shaper array is incorporated by reference.

The electron-optical device 230 may comprise one or more corrector arrays (not shown) configured to at least partly correct one or more types of aberration of the beams. Such corrector arrays may be associated with or integrated into the control lens array 250, the collimator array 271 and/or the objective lens array 241, for example as part of the objective lens assembly.

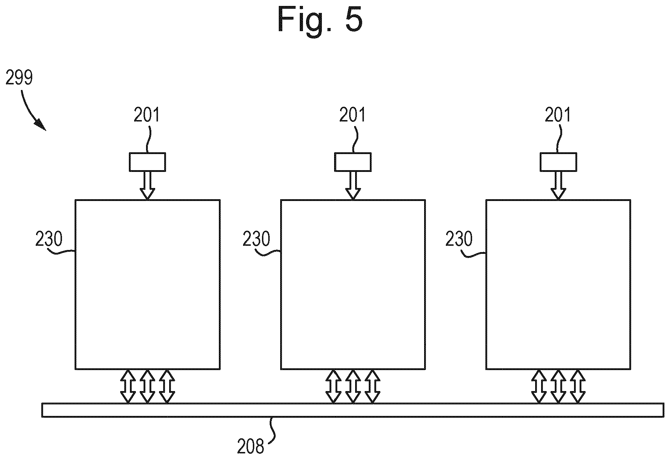

Figure 5 schematically depicts an electron-optical device array 299. In an embodiment the assessment apparatus 100 of Figure 1 comprises the electron-optical device array 299 instead of the electron-optical apparatus 140. Such an electron-optical device array 299 is also referred to as a multi-column array. The different columns (or electron-optical devices 230) may comprise in use a plurality of beams such as a beam grid. In an embodiment the electron-optical device array 299 comprises a plurality of electron-optical devices 230 of the type shown in Figure 2.

In an embodiment, one or more electron-optical elements may be shared between more than one of the electron-optical devices 230 of the electron-optical device array 299. The electron-optical elements may comprise one or more plates 261 in which a plurality of beam apertures 266 are defined for respective beam paths. In an embodiment, one or more sources 201 may be shared between more than one of the electron-optical devices 230 of the electron-optical device array 299. The sources may be comprised in a source array having different sources generating a source beam for different respective electron-optical device 230.

The electron-optical devices 230 may focus respective multi-beams simultaneously onto different regions of the same sample 208. In a different embodiment, the electron-optical devices 230 of the electron-optical device array 299 may project respective single beams towards the sample 208.

Each electron-optical device 230 of the electron-optical device array 299 may be configured in any of the ways described herein. The disclosure in WO 2022008286 A1 of how the objective lens is incorporated and adapted for use in the multi-device arrangement is hereby incorporated by reference. The disclosure in WO 2021165135 A1 of a multi-device arrangement of a multi-beam device comprising a collimator at, or proximate to, an intermediate focus is hereby incorporated by reference.

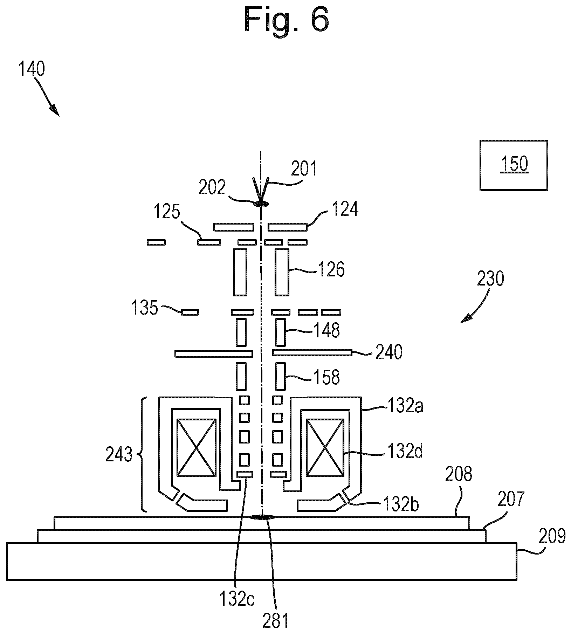

Figure 6 schematically depicts an electron-optical apparatus 140 of an assessment apparatus, for example the assessment apparatus 100 of Figure 1. As shown in Figure 6, in an embodiment the electron-optical apparatus 140 comprises an electron-optical device 230 that comprises a beam limit aperture 125 (the image actually shows an array of selectable beam limiting apertures), a condenser lens 126, a column aperture 135 (again indicated as an array of selectable column apertures 135), an objective lens 243 and a detector array 240.

The source 201 is configured to generate a source beam 202. A gun aperture 124 blocks peripheral electrons of the source beam 202. The source beam 202 passes through the beam limit aperture 125, the condenser lens 126 and the column aperture 135. The condenser lens 126 may be magnetic, electrostatic or a combination of magnetic and electrostatic.

In an embodiment the electron-optical device 230 comprises electromagnetic multipole, for example quadrupole, electron lenses. For example, the electron-optical device 230 may comprise a first multipole lens 148 and a second multipole lens 158. In an embodiment, the first multipole lens 148 and the second multipole lens 158 are used for controlling the source beam 202. For example, the first multipole lens 148 may be configured to adjust the beam current of the source beam 202. The second multipole lens 158 may be configured to adjust the size of the probe spot 281 and/or the shape of the source beam 202.

The objective lens 243 focuses the source beam 202 onto the sample 208. In an embodiment the objective lens 243 comprises a pole piece 132a, a control electrode 132b, a deflector 132c and an exciting coil 132d. **In** an embodiment a deflector, such as the deflector 132c or other deflectors in the objective lens 243 are configured to scan the source beam 202 across the surface of the sample 208. The detector array 240 is configured to detect signal electrons from the sample 208.

An electric power source may be provided to supply power to the assessment apparatus 100 and/or electron-optical apparatus 140. For example, such a power supply may apply respective potentials to electrodes of lenses of the electron-optical device 230.

**In** a high voltage design there may be cables to apply an electrical potential difference between distinct parts. It is known that to prevent unwanted discharge between such parts (including cable shielding terminations) at relative electrical potential one may use spatial distancing of parts at relative potentials, insulating substances between relative potentials, or use high radii of curvature for conducting surfaces. For example, it is existing technology to use dielectric material as an outer jacket of a cable or to separate conductors in a cable, e.g. using a plastic, rubber, or fluoropolymer insulator. For connectors, dielectric materials are often used with high dielectric strength. For example, insulating discs (for example as may be used on power lines) can be used to insulate connectors and to increase the path for potential discharges. Conducting materials can be used to shield and fixate the connection, and also to distribute the electric charge. Conducting stress cones (which may be referred to as conducting "trumpets") for large high voltage systems and toroid shapes are also used to prevent discharges by locally distributing the electric field.

To prevent external electromagnetic dynamics from interfering with the potential applied to inner conductor(s) of a cable, shielding may be used. The shielding surrounds the inner conductor(s). The shielding is formed of conductive material and provides a barrier to block/reduce incoming and outgoing electromagnetic interference. Often this shielding is made from woven thin copper wire to keep the cable flexible for routing.

Even when used in vacuum, high voltage systems often need insulation and/or dielectric material to prevent discharge. For example, cables can have insulating jackets. To improve insulation for parts in a vacuum, they may be cast with potting material (for example, epoxy).

High voltage shielding terminations (e.g. as a part of connectors) in small volumes and in high vacuum are usually custom designed and made as they are not available on the market.

The problem with the existing technology is that most of it cannot be used in vacuum due to, for example, outgassing and/or material stability. A further problem with the existing technology is particle shedding, which is undesirable (particularly in certain applications, such as manufacture of substrates). In addition, when going to smaller dimensions, specifically the millimeter scale, existing technology parts do not fit as the volume is too small. Furthermore, reducing the scale of the shielding termination increases the electric fields, thereby increasing the risk of unwanted electric discharge and/or arcing.

In particular, for use in smaller spaces, distances between parts are reduced, which increases the electric fields. Furthermore, there is less volume for insulating material. Reducing the scale of the parts often reduces the radius of curvature of the surfaces. For curved surfaces, the electric field increases with approximately *E* ∝ 1/*a*, where *E* is the electric field and *a* is the surface local radius of curvature. Hence, reducing the radius of curvature also increases the risk of unwanted discharge and/or arcing. The surface shape to give the minimal electric field (approximately) may not fit due to miniaturization (Rogowski profile), and/or may not be manufacturable. As a separate issue, going to smaller scales for parts increases the presence of smaller cavities that can trap bubbles when filled with potting material. Such bubbles are often of different dielectric strength with respect to their surroundings and thereby form local weaknesses in the insulating material where the risk for unwanted discharges is increased. Overall, existing technology is insufficient to be used in high vacuum for cable shielding terminations at the millimeter range and below, as the risk for discharges and arcing when used with high voltage becomes too high.

In an embodiment, a method is provided of forming a cable shielding termination of a cable. As will be understood from the description below, the present method may address and/or reduce at least one of the issues identified cables to be used for high voltages for use in smaller spaces.

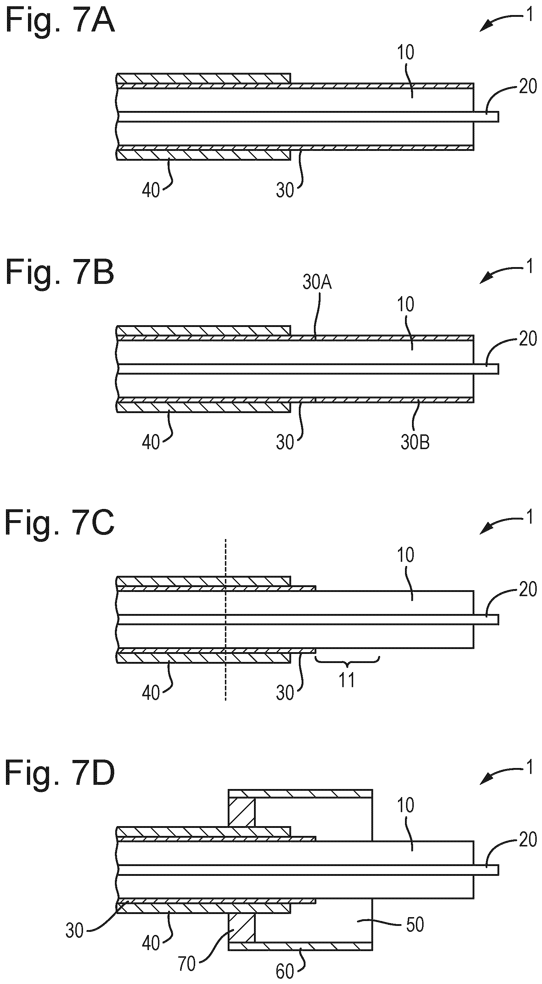

An example of such a cable 1 is shown in figure 7A. The cable 1 comprises an insulator layer 10 surrounding a conductor 20 and a shielding layer 30 surrounding the insulator layer 10.

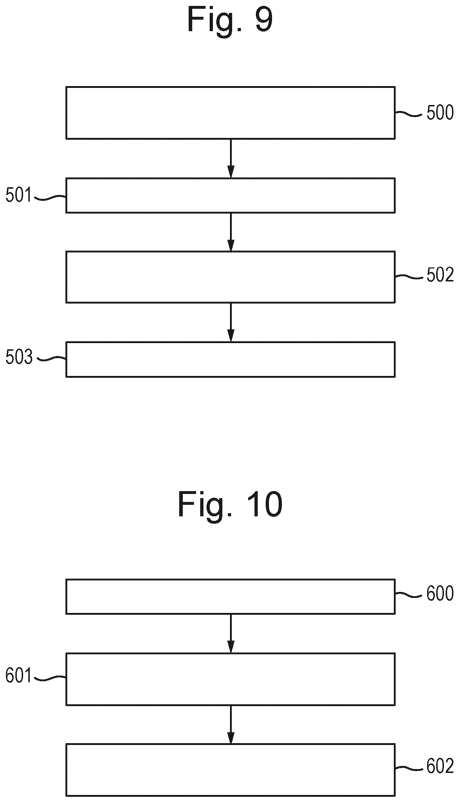

The method comprising at least some of the steps of the flow diagram shown in figure 9. The method comprises steps of (optionally) removing at least part of an outer jacket to expose the shielding layer (step 500), exposing part of the insulator layer 10 from beneath the shielding layer 30 (step 501), etching at least part of the exposed part of the insulator layer 10 creating an etched part (step 502); and applying potting material around at least the etched part of the insulator layer 10 and an end portion of the shielding layer 30 (step 503).

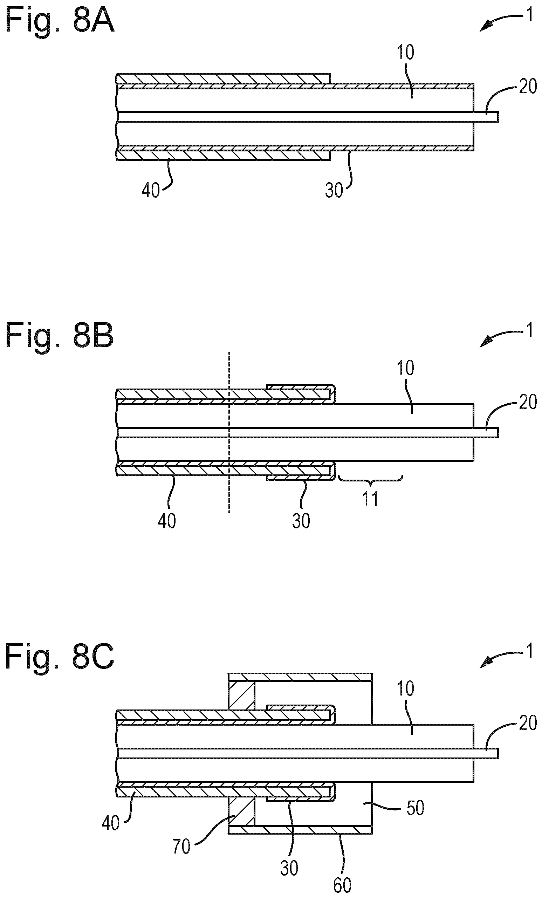

In an embodiment, a cable 1 comprising a shielding termination is provided, for example as shown in figures 7D or 8C. The cable 1 may be referred to as a coaxial cable. The cable 1 comprises an insulator layer 10 surrounding a conductor, the insulator layer 10 comprising an etched part on a surface of at least part of the insulator layer 10, a shielding layer 30 surrounding the insulator layer 10, wherein part of the shielding layer 30 is exposed towards an end of the cable 1; and a potting material layer 50 surrounding, and in contact with, at least the etched part of the insulator layer 10. The cable 1 and/or shielding termination may have features including any variations or embodiments in with or as described above. The shielding termination of the cable 1 may be formed using the method (including any variations or embodiments of features) in line with or as described above. The cable 1shielding termination has the advantages corresponding to those described above.

It is noted that although some shielding terminations are known, e.g. stress cones, these require a large volume which may not be available for some applications.

The cable 1 comprising the shielding termination described above (or formed using the method described above) provides a connector which can reliably be used for high voltages, for example only, for multiples of tens of kiloVolts. High voltage may be considered 1 kV and above. The cable shielding termination may be particularly useful for applications of 10 kV and above, or even 20 kV and above. For example, up to 50 kV, or 100 kV. Additionally, the embodiments may be reliably used in a vacuum. The embodiments may be reliably used in a high vacuum, for example, at approximately 10⁻⁷ mbar or lower. Although the shielding termination may be particularly useful in a vacuum, it may also be used in a gas environment. The shielding termination provides sufficient insulation to prevent discharge or arcing.

In particular, etching the insulator layer 10 before applying the potting (i.e. having a surface of the insulator layer 10 which is etched) ensures that there is minimal or no creep underneath the potting when put on high voltage. The inventors found that the use of the etching step (i.e. having certain surfaces of the cable shielding termination etched) significantly improved reliability of the adhesion between the potting and other parts of the cable 1, i.e. even at high voltage. For example, the etching of the insulator layer 10 is clearly visible due to the coloring of the insulator. In particular, the etched surface of the insulator layer 10 is discolored, and for example, generally has a brown hue. It is noted that this may be particularly visible for substantially white cables. Other colour cables may be used and other discoloration may be visible.

It is noted that in general, electrons escape from a negatively charged part and discharge to something that is less negative/more positively charged. For cables, usually (but not necessarily) the braiding is kept at ground potential. In this case, the invention is beneficial when a positive potential is applied to the core relative to the braiding, as electrons may otherwise try to escape the braiding and this can be alleviated/avoided by applying potting material in accordance with the present invention. In other words, the cable termination of the present embodiments can avoid or ameliorate unwanted discharge from the shielding layer 20 specifically, i.e. when the shielding layer 30 is negative relative to the conductor 20.

The cable 1 may comprise a shielding termination at each end. The cable 1 may be substantially uniform in cross section between end portions, e.g. between shielding terminations at each end.

The conductor 20, insulator layer 10, and shielding layer 30 may be formed of any appropriate material. The shielding layer 30 may be any appropriate conducting material. For example, the shielding layer 30 may be braided shielding. The insulator layer 10 may be any appropriate insulating material. For example, the insulator layer 10 may be Fluorinated Ethylene Propylene (FEP) or polytetrafluoroethylene (PTFE) (or another non-stick material). Although any appropriate material may be used for the insulator layer 10. For example, the insulator layer 10 may be made from polymers like polyvinyl chloride (PVC), polyethylene (PE), cross-linked polyethylene (XLPE), silicone rubber, impregnated paper, thermoplastic elastomers (TPE), fluoropolymers, and even fiberglass and mica.

The cable 1 may further comprise an outer jacket 40 surrounding the shielding layer 30. The method may include an (optional) step of removing at least part of an outer jacket 40 to expose the shielding layer 30 (step 500 in figure 9). In particular, the method may comprise a step of removing an end portion of the outer jacket 40 to expose the end of the shielding layer 30. However, this is not a necessity, and the cable 1 may be provided as shown in figure 7A. For example, the step of removing at least part of an outer jacket 40 may be carried out prior to the cable 1 being provided. The outer jacket 40 may surround the shielding layer 30 except for the exposed part of the shielding layer 30 which extends beyond the outer jacket 40. In other words, the outer jacket 40 may surround all of the shielding layer 30 except for an exposed part of the shielding layer 30 towards the end of the cable 1, i.e. in the cable shielding termination (and noting that a cable shielding termination may be provided at either end of the cable 1).

The outer jacket 40 may be any appropriate insulating material. The outer jacket 40 may be Fluorinated Ethylene Propylene (FEP) or polytetrafluoroethylene (PTFE) (or another non-stick material). Although any appropriate material may be used for the insulator layer 10. For example, the insulator layer 10 may be made from polymers like polyvinyl chloride (PVC), polyethylene (PE), cross-linked polyethylene (XLPE), silicone rubber, impregnated paper, thermoplastic elastomers (TPE), fluoropolymers, and even fiberglass and mica.

For example only, the outer jacket 40 and the insulator layer 10 may be the same material. For example, the outer jacket 40 and the insulator layer 10 may both be FEP. The outer jacket 40 and insulator layer 10 may be different colours, e.g. white inner insulator layer 10 and black outer jacket 40. The different colours may be beneficial in easily distinguishing between the different layers.

Applying the potting material (step 503) may comprise applying the potting material around at least part of the outer jacket 40 (for example, as shown in figure 7D). The potting material may be applied to an end portion of the outer jacket 40 (i.e. at least some of the outer jacket 40 is not covered by potting material). Applying the potting material around at least part of the outer jacket 40, and particularly the end of the outer jacket 40, may be particularly beneficial in providing a reliable connection between the potting material and the cable 1, which may reduce the likelihood of unwanted electrical discharge at higher voltages.

The potting material may otherwise be referred to as insulating material. The potting material may be any appropriate material, for example, and may be epoxy. Preferably, the potting material is transparent. This is beneficial for allowing inspection of the quality of the potting material layer 50, for example, to check for any voids in the potting material.

Exposing part of the insulator layer 10 may comprises cutting part of the end portion of the shielding layer 30 to create the exposed part of the insulator layer 10. A cut 30A in the shielding layer 30 can be seen in figure 7B. The shielding layer 30 may be cut shortly after the outer jacket 40. The cut 30A in the shielding layer 30 may be closer to the end of the outer jacket 40 than the end of the insulator layer 10. The cut in the shielding layer 30 may be between the end of the outer jacket 40 and the end of the insulator layer 10. The shielding layer 30 may be cut at substantially the same point as the outer jacket 40 (contrary to what is shown in figures 7B-7D). In other words, the shielding layer 30 may not extend further than the outer jacket 40 (between the end of the outer jacket 40 and the end of the insulator layer 10). Thus, the outer jacket 40 and the shielding layer 30 may be cut at the same position. The end of the shielding layer 30 can be removed. In other words, the portion 30B of the shielding layer 30 between the cut 30A and the end of the cable 1 (as shown on the right hand side in figure 7B) can be removed. As shown in figure 7C, removal of the end portion of the shielding layer 30 exposes part of the insulator layer 10. The exposed part of the insulator layer 10 is the part of the insulator between an end portion of the shielding layer 30 and the end of the insulator layer 10. In particular, the surface of the insulator layer 10 is exposed between the cut end of the shielding layer 30 and the end of the insulator layer 10. The cut end of the shielding layer 30 may provide an end of the shielding layer 30 which is the closest part of the shielding layer 30 to the end of the cable 1 (i.e. to that end of the cable 1 which is part of the shielding termination as shown in figures 7B and 7C). The cut end of the shielding layer 30 may provide a remaining exposed part of the shielding layer 30, i.e. a part of the shielding layer 30 which extends beyond the outer jacket 40 (as can be seen in figures 7B-7D). The shielding layer 30 which extends beyond the outer jacket 40 may be substantially circular in cross-section. The cable 1 having a cut end of the shielding layer 30 is shown in figure 7C.

After the shielding layer 30 is removed from the insulator layer 10, and the insulator layer 10 is exposed, the method comprises etching at least part of the exposed part of the insulator layer 10 creating an etched part (step 502). As described above, etching the insulator layer 10 is particularly beneficial in order to provide improved adhesion to potting material which can be provided over at least part of the cable shielding termination.

At least the portion of the insulator surface which is adjacent to the cut end of the shielding layer 30 may be etched. In other words, the etched part 11 of the insulator layer 10 may be adjacent to a portion of the shielding layer 30. Thus, at least the portion of surface of the insulator layer 10 between the end of the shielding layer 30 and the end of the cable 1, and which is directly adjacent to the end of the shielding layer 30 closest to the end of the cable 1, can be etched. As the etched part 11 of the insulator layer 10 is next to the end of the shielding layer 30, this is particularly beneficial in providing an improved connection to the potting material in a position in which high electric fields are expected due to the end of the shielding layer 30.

Although it is indicated that only a portion of the insulator layer 10 is etched, i.e. adjacent to the end of the shielding layer 30 as shown in figure 7C, this is not a necessity. Instead, the whole end part of the cable 1, e.g. all of the exposed part of the insulator layer 10 as shown in figure 7C may be etched, including part of the shielding layer 30 and the outer jacket 40. For example, the end of the cable 1 to the right of the dashed line shown in figure 7C might be etched. This may be preferable for simplifying the etching process.

Any appropriate etching process may be used. The etching step may be selected based on the specific materials chosen, for example, the material forming the insulator layer 10. For example, the etching step may use sodium naphthalene, or sodium ammonia, or oxygen plasma. It is noted that etching using sodium naphthalene or sodium ammonia may be particularly appropriate if the insulator layer 10 is a fluoropolymer. For example, an etchant may be made using sodium in a naphthalene suspension or an ammonia solution. The solution can be applied to the surface of the insulator layer 10 in an inert atmosphere. The use of sodium naphthalene may be particularly suitable when the insulator layer 10 is formed of Fluorinated Ethylene Propylene (FEP) and/or Perfluoroalkoxy (PFA). The use of sodium ammonia may be particularly suitable when the insulator layer 10 is formed of Perfluoroalkoxy (PFA). The etched portion of the insulator layer 10 has a brown hue. The discoloration may be greater for etching using sodium ammonia. The skilled person would be able to identify the etched part of the surface due to the discoloration/hue and general appearance of the portion of the surface which is etched. Further detail on etching may be found in at least one of Kim, S.R. (2000), Surface modification of poly(tetrafluoroethylene) film by chemical etching, plasma, and ion beam treatments. J. Appl. Polym. Sci., 77: 1913-1920. https://doi.ora/10.1002/1097-4628(20000829)77:9<1913::AID-APP7>3.0.CO:2-%23, Marchesi, J. T., Keith, H. D., & Garton, A. (1992). Adhesion to Sodium Naphthalenide Treated Fluoropolymers. Part III. Mechanism of Adhesion. The Journal of Adhesion, 39(4), 185-205. https://doi.org/10.1080/00218469208030462, J.P. Badey, E. Espuche, Y. Jugnet, B. Chabert, Tran Minh Duct, Influence of chemical and plasma treatments on the adhesive properties of PTFE with an epoxy resin, International Journal of Adhesion and Adhesives, Volume 16, Issue 3, 1996, Pages 173-178, ISSN 0143-7496, https://doi.org/10.1016/0143-7496(95)00042-9, or Brewis, D. M., Mathieson, I., Sutherland, I., & Cayless, R. A. (1993). Adhesion Studies of Fluoropolymers. The Journal of Adhesion, 41(1-4), 113-128. https://doi.org/10.1080/00218469308026557 which are hereby incorporated by reference. Any appropriate forms of etching may be implemented. Alternatively, oxygen plasma etching may be used and should provide the same improved adhesion between the potting and at least the insulator layer 10. It is noted that the shelf life may be shorter (e.g. hours) as compared to sodium naphthalene etched cables (which may still be processed after a few months), therefore, the potting step would have to be applied right after plasma treatment due to the shorter shelf life whereas cables etched with sodium naphthalene may have potting applied up to a few months later. The shelf life of the etched portion is the length of time after etching in which the portion will retain the etched properties, i.e. during which improved adhesion between the potting and insulator layer is provided by the etched surface. Thus, the next steps of the process, e.g. the potting step, should be carried out before expiry of the shelf life.

The etching may be applied to at least the end of the shielding layer 30. The etching may be applied to all of the shielding layer 30 exposed at the end of the outer jacket 40, e.g. the end portion of the shielding layer 30 which can be seen between the end of the outer jacket 40 and the end of the cable 1 in figure 7C (i.e. the portion to the right hand side of the end of the outer jacket 40). At least part of the outer jacket 40 may also be etched. In other words, the etching may be applied to at least part of the outer jacket 40. In other words, the etching step may comprise etching at least part of the outer jacket 40. This may be beneficial for providing improved adhesion with other parts of the cable termination (e.g. the potting material layer 50 and/or adhesive 70)

The etching solution may be applied to all parts of the cable 1 to which the potting material is to be applied and/or to which other parts of the cable termination are to adhere. Thus, the etching solution is preferably applied to at least part of the insulator layer 10 (etched part 11), the end of the shielding layer 30, and an end of the outer jacket 40 on which potting material can be adhered (and optionally to a part of the outer jacket 40 for connecting to an insulator mould 60). The etching solution may only be applied to the part of the cable 1 on which potting material, and optionally to a part of the cable 1 to which the insulator mould 60 is to be attached (e.g. when adhesive 70 may be used). For example, the etching solution may only be applied on part of the insulator layer 10 (etched part 11), the end of the shielding layer 30, and an end of the outer jacket 40, i.e. to the parts of the cable 1 on which the potting material is applied in figure 7D.

The potting material layer 50 surrounds, and in contact with, at least the etched part of the insulator layer 10. This is beneficial in reducing or avoiding creep of electrons between the conductor 20 and the cut end of the shielding layer 30. Preferably, the potting material layer 50 surrounds, and is in contact with the end of the shielding layer 30 (preferably all of the cut end of the shielding layer 30 which is exposed at the end of the outer jacket 40). This is beneficial because in use there typically is a high electric field at the exposed end of the shielding layer 30, but when encapsulated in potting, this local high electric field will not lead to a discharge. Preferably, the potting material surrounds, and is in contact with, at least the part of the outer jacket 40. The insulating potting material can be cast around part of the end of the cable 1, and used to cover and insulate part of the outer jacket 40 of the cable 1, the exposed shielding (which may be braided), and part of the insulator layer 10.

The potting material layer 50 could be of any appropriate length depending on the size of the cable 1. For information only, the potting material may be approximately a few cm, for example, 1 cm or 2 cm or 3 cm. At least half the length of the potting material may be over the insulator material, although it will be understood that other configurations may provide the above described advantages.

Applying the potting material (step 503 of figure 9) may comprise at least some of the steps of the flow diagram in figure 10. In particular, applying the potting material comprises attaching an insulator mould 60 to the cable 1 (step 600)_and filling the insulator mould 60 with potting material (step 601). As discussed further below, the mould may be retained as part of the cable, or may be removed, and figure 10 includes an optional step 602 of removing the mould after the potting material has set. The cable 1 comprising the cable 1 shielding termination may further comprise an insulator mould 60 surrounding the potting material layer 50. The insulator mould 60 described herein may remain in place after formation of the cable 1 shielding termination, and form part of the cable shielding termination.

Preferably the mould is attached to the cable 1 in such a way that the potting material can be easily provided within the mould. For example, the cable 1 as shown in figure 7D may be provided at 90 degrees to the orientation shown with the mould attached to the cable 1. The potting material may be poured into the space formed between the mould and the cable 1, so as to provide the layer of potting material 50 as shown in figure 7D. The method may include steps to reduce or avoid bubbles in the potting material, e.g. mixing the potting prior to pouring, vibrating the cable 1 with the potting is poured and prior to setting, the potting may be applied in a vacuum chamber. Applying the potting may comprise an initial step of applying a small amount of potting material to the exposed part of the shielding layer 30, allowing the potting material to set and then carrying out other steps relating to the potting (e.g. attaching the insulator mould 60 and/or pouring the potting). This may be beneficial in reducing or avoiding the potting material being pulled into the shielding layer 30 (e.g. when a braided shielded layer).

The potting material may be prevented from falling out of the bottom of the mould due to the attachment to the cable 1. The attachment is beneficial in preventing the potting from leaking over the jacket due to gravity. As shown in figure 7D, the insulator mould 60 may be attached to the cable 1 using adhesive 70, for example epoxy glue, e.g. two component epoxy glue. It is noted that for the adhesive 70 to adhere well, the adhesive 70 may be applied to a part of the outer jacket 40 which has been etched. Additionally or alternatively, the insulator mould 60 may be attached to the cable 1 using an interference fit. In other words, the insulator mould 60 may be attached to the cable 1 by as interference fit between the mould and the cable 1. Preferably, the method comprises aligning the axes of symmetry of the cable and mould, i.e. the position of the cable and/or mould can be maintained to keep the cable centered in the mould during potting.

The insulator mould 60 may form an exterior shell surrounding the potting material. The insulator mould 60 may be rigid, so that it retains its own shape when attached to the cable 1 and is able to contain the potting material between the cable 1 and an inner surface of the mould.

The insulator mould 60 may have a substantially cylindrical shape. Thus, the insulator mould 60 may be used to provide a cylinder of insulation around at least part of the cable shielding termination of the cable 1. More particularly, the cylinder of insulation may be provided around part of the insulator layer 10 and an end portion of the shielding layer 30 to provide effective electrical insulation to reduce the risk of unwanted electric discharge and/or arcing.

Preferably, the insulator mould 60 is transparent. This is beneficial for allowing inspection of the quality of the potting material layer 50, for example, to check for any voids in the potting material.

The insulator mould 60 may be glass. Although other materials may be used instead, for example, quartz or ceramics (noting that the mould may not be transparent, even though this may be preferred). As noted above, glass is particularly beneficial if it is transparent glass so as to allow for visual inspection of the cable shielding termination.

Although the mould is described above as part of the shielding termination when formed, i.e. is retained after the method of formation, this is not necessary. The potting material could be cast in a removable mould, e.g.a mould placed around the cable 1 and in which the potting material is supplied, and then the mould is removed. Thus, the method may comprise removing the mould after the potting material has set. In this case, the mould may be attached by means other than adhesive 70, i.e. to be easily removable after the potting material has set.

At least a portion of the insulator layer 10 may not have potting material around it. In particular, a portion of the insulator layer 10 which is towards the end of the cable 1 may not have potting material around it. Thus, an end section of the insulator layer 10 may not have potting material around it. This may be beneficial in that the cable remains relatively small in diameter towards the end, allowing the socket into which it is plugged to be relatively small in diameter as well. Additionally, this may be beneficial in that the conductor 20 has additional flexibility, i.e. can move more easily with the insulator (rather than being more fixed/having increased rigidity due to the potting). Generally, the insulator is less rigid than the potting, and makes the core conductor mechanically more tolerant. Force applied on the core conductor will thereby not easily loosen the potting from the cable.

As shown in figures 7A-7D, the cable 1 may include at least part of the conductor 20 exposed at an end of the cable 1. The conductor 20 may extend from the end of the cable shielding termination. The method may comprise exposing at least part of the conductor. Although the cable 1 could well be provided as shown in figure 7A for the other steps of the method to be carried out.

In summary in relation to figures 7A-7D, the method comprises providing a cable comprising an insulator layer surrounding a conductor and a shielding layer surrounding the insulator layer as shown in figure 7A, in which part of the outer jacket has been removed to expose the shielding layer (step 500). Exposing part of the insulator layer 10 (step 501) by cutting the shielding layer at cut 30A as shown in figure 7B, and removing the portion 30B of the shielding layer 30 as shown in figure 7C. Etching at least part of the exposed part of the insulator layer (step 502) creating an etched part, e.g. comprising at least etched part 11 as shown in figure 7C. Applying potting material around at least the etched part of the insulator layer and an end portion of the shielding layer (step 503) as shown in figure 7D.

In the above embodiment, the end of the shielding layer 30 is cut (as indicated in figure 7B). In an alternative embodiment, the end of the shielding layer 30 (which is exposed from beneath the outer jacket 40) is folded-back on itself. In this case, the step of exposing part of the insulator layer 10 comprises folding-back the end portion of the shielding layer 30 to create the exposed part of the insulator layer 10. The folding back on itself means that the shielding layer 30 forms a double layer at the folded end, as shown in figures 8B and 8C. The folding back on itself means that the end of the shielding layer 30 may be folded back over the outer jacket 40, as can be seen in figures 8B and 8C. In this case, the folded end of the shielding layer 30 may replace the cut end of the shielding layer 30 discussed in the above embodiment. In other words, the folded section of the shielding layer 30 may provide an end of the shielding layer 30 which is the closest part of the shielding layer 30 to the end of the cable 1 (i.e. to that end of the cable 1 which is part of the shielding termination as shown in figures 8B and 8C). The cable 1 having a folded end of the shielding layer 30 is shown in figure 7C.

If the wire is cut, this gives sharp edges. The surface radius of the cut is then very small (decreased), giving locally high electric field strength. When the cut is folded back, the sharp edges (i.e. the cut edges) are moved further away from the exposed conductive core. At the closest point of the shielding to the exposed conductive core, it is folded, without sharp edges, with the same surface curvature radius as the uncut shielding wire. Thus, folding back the shielding layer 30 increases the distance between the shielding and the exposed core conductor without decreasing the shielding wire radius at this distance. Therefore, folding back the shielding layer 30 may be beneficial to shield a straight cut of the wires forming the shielding layer 30. In other words, to avoid a straight cut end of the shielding layer 30 as shown in figure 7A-7D. However, it is noted also that cutting the shielding layer 30 without folding may be preferable as this would simplify the manufacturing and allow the dimensions of the shielding termination to be significantly reduced.

In case of folding back, the shielding layer 30 may also be cut to a convenient length (although it is not a necessity to cut and fold the shielding layer 30 and if preferred, only one or the other of these steps may be carried out).

When the shielding layer 30 is folded back, as shown in figure 8B, the potting material preferably covers all of the folded back part of the shielding layer 30 as shown in figure 8C. In other words, the potting material covers all of the part of the shielding layer 30 which is folded back on itself (i.e. the part of the shielding layer 30 which is not concealed under the outer jacket 40.

In summary in relation to figures 8A-8C, the method comprises providing a cable comprising an insulator layer surrounding a conductor and a shielding layer surrounding the insulator layer as shown in figure 8A, in which part of the outer jacket has been removed to expose the shielding layer (step 500). Exposing part of the insulator layer 10 (step 501) by folding back the shielding layer 30 over the outer jacket as shown in figure 8B (which may optionally involve cutting and removing an end of the shielding layer prior to folding back). Etching at least part of the exposed part of the insulator layer (step 502) creating an etched part, e.g. comprising at least etched part 11 as shown in figure 7B. Applying potting material around at least the etched part of the insulator layer and an end portion of the shielding layer (step 503) as shown in figure 8C.

Embodiments of the invention may be used to provide a cable 1 in any appropriate system. Although embodiments of the invention may be particularly useful for inspection tools, e.g. multibeam and/or single beam inspection tools described above, embodiments may be used as part of or with other devices and systems. For example only, embodiments may be useful in lithography systems where small parts using high voltage are used.

Embodiments of the invention are described below in the following numbered clauses:
Clause 1: a method of forming a cable shielding termination of a cable , the cable comprising an insulator layer surrounding a conductor and a shielding layer surrounding the insulator layer, the method comprising the steps of:
   exposing part of the insulator layer from beneath the shielding layer;
   etching at least part of the exposed part of the insulator layer creating an etched part; and
   applying potting material around at least the etched part of the insulator layer and an end portion of the shielding layer.
Clause 2: the method of clause 1, wherein the step of exposing part of the insulator layer comprises folding-back at least part of the end portion of the shielding layer to create the exposed part of the insulator layer.
Clause 3: the method of clauses 1 or 2, wherein the step of exposing part of the insulator layer comprises cutting part of the end portion of the shielding layer to create the exposed part of the insulator layer.
Clause 4: the method of any one of clauses 1 to 3, wherein the etched part of the insulator layer is adjacent to a portion of the shielding layer.
Clause 5: the method of any one of the preceding clauses, wherein at least a portion of the insulator layer does not have potting material around it.
Clause 6: the method of any one of the preceding clauses, wherein the cable further comprises an outer jacket surrounding the shielding layer.
Clause 7: the method of clause 6, wherein the step of etching comprises etching at least part of the outer jacket.
Clause 8: the method of either one of clause 6 or 7, wherein the step of applying the potting material comprises applying the potting material around at least part of the outer jacket.
Clause 9: the method of any one of clauses 6 to 8, further comprising a step of removing at least part of an outer jacket to expose the shielding layer.
Clause 10: the method of any one of the preceding clauses, wherein the step of etching comprises using sodium naphthalene, or sodium ammonia, or oxygen plasma.
Clause 11: the method of any one of the preceding clauses, wherein the step of applying the potting material comprises:
   attaching an insulator mould to the cable; and
   filling the insulator mould with potting material.
Clause 12: the method of clause 11, wherein the insulator mould is glass.
Clause 13: the method of either one of clauses 11 or 12, wherein the insulator mould forms an exterior shell surrounding the potting material.
Clause 14: the method of any one of clauses 11 to 13, wherein the insulator mould is attached to the cable using adhesive.
Clause 15: the method of any one of clauses 11 to 14, wherein the insulator mould is attached to the cable using an interference fit.
Clause 16: the method of any one of clauses 11 to 15, wherein the mould is removed after the potting material has set.
Clause 17: the method of any one of the preceding clauses, further comprising exposing at least part of the conductor.
Clause 18: the method of any one of the preceding clauses, wherein the potting material is transparent.
Clause 19: a cable comprising a shielding termination comprising:
   an insulator layer surrounding a conductor, the insulator layer comprising an etched part on a surface of at least part of the insulator layer,
   a shielding layer surrounding the insulator layer, wherein part of the shielding layer is exposed towards an end of the cable; and
   a potting material layer surrounding, and in contact with, at least the etched part of the insulator layer.
Clause 20: the cable of clause 19, wherein the etched part of the insulator layer is adjacent to a portion of the shielding layer.
Clause 21: the cable of either one of clauses 19 or 20, wherein at least a portion of the insulator layer does not have potting material around it.
Clause 22: the cable of any one of clauses 19 to 21, wherein the cable comprises an outer jacket surrounding the shielding layer except for the exposed part of the shielding layer which extends beyond the outer jacket.
Clause 23: the cable of clause 22, wherein the shielding layer which extends beyond the outer jacket is folded-back on itself.
Clause 24: the cable of clause 22, wherein the shielding layer which extends beyond the outer jacket is substantially circular in cross section.
Clause 25: the cable of any one of clauses 22 to 24, wherein at least part of the outer jacket is etched.
Clause 26: the cable of any one of clauses 22 to 25, wherein the potting material layer surrounds, and is in contact with, at least the part of the outer jacket.
Clause 27: the cable of any one of clauses 19 to 26, further comprising an insulator mould surrounding the potting material layer.
Clause 28: the cable of clause 27, wherein the insulator mould is glass.
Clause 29: the cable of either one of clauses 27 or 28, wherein the insulator mould is an exterior shell surrounding the potting material layer.
Clause 30: the cable of any one of clauses 27 to 29, wherein the insulating mould is attached to the cable by adhesive.
Clause 31: the cable of any one of clauses 27 to 28, wherein the insulating mould is attached to the cable by an interference fit between the mould and the cable.
Clause 32: the cable of any one of the preceding clauses, wherein part of the conductor is exposed at an end of the cable.
Clause 33: the cable of any one of the preceding clauses, wherein the potting material is transparent

Although specific reference may be made in this text to embodiments of the invention in the context of an electron microscope, embodiments of the invention may be used in other types of apparatus. Embodiments of the invention may form part of a mask inspection apparatus, a metrology apparatus, or any apparatus that measures or processes an object such as a wafer (or other substrate) or mask (or other patterning device).

Although specific reference may have been made above to the use of embodiments of the invention in the context of sample assessment, it will be appreciated that the invention, where the context allows, is not limited to sample assessment and may be used in other applications, for example electron beam lithography.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

List of reference numerals:
100 assessment apparatus
110 vacuum chamber (main chamber)
120 load lock chamber
130 EFEM
130a first loading port
130b second loading port
140 electron-optical apparatus (electron beam apparatus, electron apparatus)
150 controller
201 source
202 source beam
207 sample holder
208 sample
209 actuatable stage
211, 212, 213 primary beams (sub-beams, beamlets)
230 electron-optical device (electron-optical column)
231 condenser lens array
240 detector array
241 objective lens array
242 beam shaper array
250 control lens array
252 beam limiting aperture array
260 scan deflector array
261 plate
271 collimator array
273 intermediate focus plane
274 macro condenser lens
275 macro scan deflector
281-283 probe spots
299 electron-optical device array
1 cable
10 insulator layer
11 etched part of insulator layer
20 conductor
30 shielding layer
30A cut in shielding layer
30B portion of shielding layer to be removed
40 outer jacket
50 potting material layer
60 insulator mould
70 adhesive

## Claims

1. A cable comprising a shielding termination comprising:
an insulator layer surrounding a conductor, the insulator layer comprising an etched part on a surface of at least part of the insulator layer,
a shielding layer surrounding the insulator layer, wherein part of the shielding layer is exposed towards an end of the cable; and
a potting material layer surrounding, and in contact with, at least the etched part of the insulator layer.

2. The cable of claim 1, wherein the etched part of the insulator layer is adjacent to a portion of the shielding layer.

3. The cable of either one of claims 1 or 2, wherein at least a portion of the insulator layer does not have potting material around it.

4. The cable of any one of claims 1 to 3, wherein the cable comprises an outer jacket surrounding the shielding layer except for the exposed part of the shielding layer which extends beyond the outer jacket.

5. The cable of claim 4, wherein the shielding layer which extends beyond the outer jacket is folded-back on itself, and/or wherein at least part of the outer jacket is etched.

6. The cable of claim 4 or 5, wherein the potting material layer surrounds, and is in contact with, at least the part of the outer jacket.

7. The cable of any one of the preceding claims, further comprising an insulator mould surrounding the potting material layer.

8. The cable of claim 7, wherein the insulator mould is glass.

9. The cable of any one of the preceding claims, wherein the potting material is transparent.

10. A method of forming a cable shielding termination of a cable, the cable comprising an insulator layer surrounding a conductor and a shielding layer surrounding the insulator layer, the method comprising the steps of:
exposing part of the insulator layer from beneath the shielding layer;
etching at least part of the exposed part of the insulator layer creating an etched part; and
applying potting material around at least the etched part of the insulator layer and an end portion of the shielding layer.

11. The method of claim 10, wherein the step of exposing part of the insulator layer comprises:
folding-back at least part of the end portion of the shielding layer to create the exposed part of the insulator layer; and/or
cutting part of the end portion of the shielding layer to create the exposed part of the insulator layer.

12. The method of claim 10 or 11, wherein the cable further comprises an outer jacket surrounding the shielding layer, and wherein the step of etching comprises etching at least part of the outer jacket.

13. The method of claim 12, wherein the step of applying the potting material comprises applying the potting material around at least part of the outer jacket.

14. The method of any one of the claims 10 to 13, wherein the step of etching comprises using sodium naphthalene, or sodium ammonia, or oxygen plasma.

15. The method of any one of the claims 10 to 14, wherein the step of applying the potting material comprises further steps of:
attaching an insulator mould to the cable; and
filling the insulator mould with potting material.
